# EUROPÄISCHE PATENTSCHRIFT

(11) **EP 2 621 318 B1**
(45) Veröffentlichungstag und Bekanntmachung des Hinweises auf die Patenterteilung: **23.07.2014**
(21) Anmeldenummer: 11761313.3
(22) Anmeldetag: 06.09.2011
(51) Int. Cl.: A47J 36/10, A47J 43/046

(54) **ELEKTRISCH BETRIEBENE KÜCHENMASCHINE MIT EINEM GARGEFÄSS SOWIE GEFÄSS MIT EINEM DECKEL**
ELECTRICALLY OPERATED FOOD PROCESSOR WITH A COOKING VESSEL, AND VESSEL WITH A LID
APPAREIL DE CUISINE ÉLECTRIQUE COMPRENANT UN RÉCIPIENT DE CUISSON AINSI QUE RÉCIPIENT POURVU D'UN COUVERCLE

(30) Priorität: 17.06.2011 DE 102011051149; 30.09.2010 DE 102010037892
(43) Veröffentlichungstag der Anmeldung: 07.08.2013
(73) Patentinhaber: Vorwerk & Co. Interholding GmbH, 42275 Wuppertal (DE)
(72) Erfinder: ARNOLD, Hans-Peter, 58566 Kierspe (DE); JACOBS, Carsten, 42477 Radevormwald (DE)
(74) Vertreter: Müller, Enno
(86) Internationale Anmeldenummer: PCT/EP2011/065353
(87) Internationale Veröffentlichungsnummer: WO 2012/041660

(56) Entgegenhaltungen:
- EP-A1- 1 153 563
- WO-A1-99/17646
- US-A- 3 080 996
- US-A1- 2004 200 851
- US-B1- 6 340 124

## Beschreibung

Die Erfindung betrifft zunächst ein Gefäß mit einem Deckel nach den Merkmalen des Oberbegriffs des Anspruches 1.

Weiter betrifft die Erfindung eine elektrisch betriebene Küchenmaschine gemäß den Merkmalen des Oberbegriffs des Anspruches 15.

Küchenmaschinen und Gefäße mit einem Deckel der hier in Rede stehenden Art sind bekannt. Diese dienen insbesondere im Haushaltsbereich zur Herstellung oder Vorbereitung von Speisen, wozu das der Küchenmaschine zuordbare Gargefäß ausgelegt ist zur Aufnahme von Nahrungsmitteln, beispielsweise Gargüter oder Fluiden. Insbesondere bei beheizbaren Gargefäßen für Küchenmaschinen werden insbesondere im Zuge des Garprozesses teilweise hohe Drücke innerhalb des Gefäßes erreicht. Ist dem Gargefäß weiter insbesondere im Bodenbereich ein Rührwerk zugeordnet, so wirkt im Rührbetrieb gegebenenfalls eine Flüssigkeitssäule unterseitig gegen den auf das Gargefäß aufgesetzten Deckel. Letzterer muss entsprechend an dem Gargefäß verriegelt werden, welche Verriegelung die in dem Gargefäß gegebenenfalls entstehenden Drücke bzw. die auf den Deckel einwirkenden Kräfte aufnehmen kann. In diesem Zusammenhang sind Lösungen bekannt, bei welchen der Deckel beispielsweise über eine bajonettartige Drehverriegelung an dem Gargefäß festsetzbar ist.

Weiter sind Küchenmaschinen der in Rede stehenden Art unter der Bezeichnung Vorwerk-Thermomix bekannt. Diesbezüglich wird beispielsweise auf die DE 10210442 A1 verwiesen.

Aus der US 6,340,124 B1 ist ein Gefäß bekannt, bei dem die Gargefäß-Wandung ohne radiale Auskragung endet. Als Verriegelungsteil ist ein Drehteil vorgesehen mit einem Übergreifabschnitt, das auf die Oberseite des Deckelrandes im Verriegelungszustand zu Auflage kommt.

Ein vergleichbarer Stand der Technik ist auch aus der WO 99/17646 A und der EP-A-1153563 bekannt.

Aus der US-A-2004/0200851 ist ein Kochtopf mit einem Deckel bekannt, wobei die Zuhaltung des Deckels durch ein von oben auf dem Deckel aufliegendes Blockierungsteil erreichbar ist.

Ausgehend von dem genannten Stand der Technik beschäftigt sich die Erfindung mit der Aufgabe, ein Gefäß oder eine Küchenmaschine der in Rede stehenden Art hinsichtlich der Deckelverregelung günstig auszugestalten.

Diese Aufgabe ist zunächst beim Gegenstand des Anspruches 1 gelöst, wobei darauf abgestellt ist, dass das insgesamt wellenartig ausgebildete Verriegelungsteil mit einer sich über die axiale Länge erstreckenden Höhlung ausgebildet ist, wobei mit Bezug auf einen Vertikalschnitt ein kreisbogenartiger Übergreifabschnitt gegeben ist und der von dem Übergreifabschnitt überdeckte Höhlungsabschnitt hinsichtlich seiner Radialerstreckung als auch hinsichtlich seiner Erstreckung in Umfangsrichtung ausgelegt ist zur formschlüssigen Aufnahme des Gefäßrandes sowie des Deckelrandes des auf dem Gefäß aufgesetzten Deckels.

Weiter ist die Aufgabe durch den Gegenstand des Anspruches 15 gelöst, betreffend eine Küchenmaschine mit den Merkmalen des Anspruches 1 oder einem der weiteren Ansprüche.

Das Verriegelungsteil ist dreh- bzw. schwenkbeweglich gelagert, dies insbesondere zur Verdrehung bzw. Verschwenkung desselben aus einer Freigabestellung in die Verriegelungsstellung und umgekehrt, dies weiter bevorzugt von Hand, insbesondere durch den Benutzer, weiter alternativ oder kombinativ hierzu zufolge eines elektromotorischen Antriebs des Verriegelungsteiles.

Das Verriegelungsteil, insbesondere ein die Verriegelung erbringender Abschnitt desselben, ist bevorzugt unmittelbar dem Überdeckungsbereich von Deckelrand und Gefäßrand zugeordnet. Das in die Verriegelungsstellung verbrachte Verriegelungsteil übergreift den Deckelrand, so dass ein die Verriegelung herbeiführender Abschnitt des Verriegelungsteiles in der Verriegelungsstellung in vertikaler Überdeckung zu dem Deckelrand, wie auch zu dem Gefäßrand liegt.

Das Verriegelungsteil ist in Erstreckungsrichtung der Achse langgestreckt im Sinne einer Welle bzw. eines Wellenkörpers mit einem Längserstreckungsmaß ausgebildet, das bevorzugt dem 2- bis 10-Fachen, weiter bevorzugt dem 3- bis 5-Fachen des quer hierzu betrachteten Maßes im Verriegelungsbereich entspricht. Die Länge des Verriegelungsteiles ist in diesem Zusammenhang weiter bevorzugt so gewählt, dass dieses unter Nichtberücksichtigung etwaig das Verriegelungsteil in Längserstreckung verlängernder Antreibmittel oder dgl., gleich oder kürzer gewählt ist als ein mittleres Quererstreckungsmaß des Gargefäßes im Bereich der nach oben weisenden und vom Deckel zu überdeckenden Gefäßöffnung, welches Erstreckungsmaß bei einem bevorzugt im Grundriss kreisrunden Gargefäß der Durchmesser ist. Hierdurch ist der Deckel gegen ein Abheben nach vertikal oben gesichert, so dass eine gegebene Druckerhöhung innerhalb des Gefäßes und/oder eine Beaufschlagung des Deckels von unten durch eine aufsteigende Flüssigkeitssäule nicht zu einem Abheben des Deckels führt und dieser so den abdeckenden Sitz auf dem Gefäß verliert. Der Deckel, insbesondere der Deckelrand, alternativ der hiermit zusammenwirkende Gefäßrand bzw. ein mit dem Deckel zusammenwirkender Gefäßabschnitt ist weiter bevorzugt mit einer Dichtung versehen, zur insbesondere flüssigkeitsdichtenden Zusammenwirkung von Deckel und Gefäß im Zusammenwirkungsbereich. Durch die gewählte Anordnung und Ausgestaltung des Verriegelungsteiles ist dieses mit geringen Kräften zu betätigen. Bei einer bevorzugten kreisscheibenförmigen Ausgestaltung des Deckels und angepasst kreisförmiger Ausgestaltung der abzudeckenden Gefäßöffnung ist ein lageunabhängiges Aufsetzen des Deckels ermöglicht.

Es ist bevorzugt, dass die geometrische Achse in ihrer Erstreckung an eine durch einen Deckelrand aufgespannte Ebene angepasst ist. Das Verriegelungsteil erstreckt sich bevorzugt zumindest partiell in einer durch den Deckelrand und/oder den Gefäßrand umlaufend aufnehmenden Ebene, welche in bevorzugter Ausgestaltung quergerichtet ist zu einer vertikal ausgerichteten Gefäßachse. Hierbei verläuft die geometrische Achse weiter bevorzugt horizontal oder schräg zu einer Horizontalen, weiter bevorzugt einen spitzen Winkel von 1° bis 15° oder bis hin zu 30° einnehmend, weiter bevorzugt parallel verlaufend zur Ebene mit einer Toleranz von bevorzugt ± 0,5° bis 30°.

Auch ist bevorzugt vorgesehen, dass die geome-trische Achse außerhalb der Gefäßwandung angeordnet ist. Diese geometrische Achse erstreckt sich insbesondere mit radialem Abstand zu einer Außenfläche der Gefäßwandung, weiter bevorzugt mit radialem Abstand außerhalb des der geometrischen Achse höhenmäßig zugeordneten Gefäßwandungsabschnitts, so dass in einer möglichen Ausgestaltung durchaus, bevorzugt mit vertikalem Abstand, ober- und/ unterhalb der geometrischen Achse diese in einer vertikalen Projektion - mit Bezug auf eine Nutzungsstellung des Gefäßes - die geometrische Achse einen Bereich der Gefäßwandung tangiert oder auch diese durchsetzt. Weiter bevorzugt ist vorgesehen, dass die geometrische Achse die Gefäßwandung im Bereich des höhenmäßig der Achse zugeordneten Gefäßwandungsabschnittes die Gefäßwandung durchsetzt, weiter bevorzugt derart, dass die geometrische Achse über ihre Erstreckung betrachtet mit einem Teilabschnitt durch das Gefäßinnere sich erstreckt, wobei weiter bevorzugt zumindest ein weiterer Teilabschnitt der geometrischen Achse in entsprechender Verlängerung unter Durchsetzung der Gefäßwandung sich außerhalb derselben erstreckt.

In einer weiter bevorzugten Ausgestaltung ist vorgesehen, dass in der Verriegelungsstellung ein Formschluss erreicht ist, wobei zumindest ein Teilabschnitt des Verriegelungsteils den Deckel, insbesondere den Deckelrand formschlussartig übergreift. Bevorzugt wirkt der mit dem Deckelrand zusammenwirkende Abschnitt des Verriegelungsteiles in der im Betrieb der Küchenmaschine nicht durch Druckbeaufschlagung oder dgl. von innen belasteten Grundstellung des Deckels nicht kraftschlüssig, wenngleich in alternativer Ausgestaltung, weiter gegebenenfalls in Abhängigkeit von der Ausgestaltung der zwischen Deckel und Gefäßwandung bzw. Gefäßrand wirkenden Dichtung, neben dem Formschluss ein derartiger Kraftschluss erreicht sein kann. Zur Bildung des Formschlusses ist insbesondere der der Verriegelung dienende Abschnitt des Verriegelungsteiles mit Bezug auf einen Vertikalquerschnitt zumindest abschnittsweise formangepasst an den zu übergreifenden Deckelrand.

Auch ist bevorzugt vorgesehen, dass das Verriegelungsteil aus der Freigabestellung in die Verriegelungsstellung und umgekehrt von einer oder beiden Endbereichen drehend antreibbar ist. Unmittelbar angreifend an dem Verriegelungsteil, gegebenenfalls aber auch angreifend an einem das Verriegelungsteil verlängernden Abschnitt, beispielsweise eine formschlüssig mit dem Verriegelungsteil verbundene Antriebswelle, ist zur Verlagerung des Verriegelungsteiles dieses per Hand durch den Benutzer erfassbar oder alternativ bzw. kombinativ hierzu antreibbar mittels eines zugeordneten, weiter bevorzugt in der Küchenmaschine entsprechend vorgesehenen Elektromotors. Im Falle des Drehantriebs über einen küchenmaschinenseitigen Elektromotor erfolgt bevorzugt die Verlagerung des Verriegelungsteiles in die Verriegelungsstellung oder aus dieser heraus in die Freigabestellung mittels Tastendruck oder dgl., weiter bevorzugt selbsttätig mit Einschalten der Küchenmaschine bzw. Inbetriebnahme einer Heizung der Küchenmaschine und/oder eines Rührwerks der Küchenmaschine. Ist weiter, wie bevorzugt, eine Deckeldetektierung vorgesehen, so ist eine Inbetriebnahme der Küchenmaschine (Heizung und/oder Rührwerk) nur bei ordnungsgemäß aufgesetztem und verriegeltem Deckel möglich. Zudem erstreckt sich die geometrische Achse bevorzugt unterhalb des Gefäßrandes, weiter bevorzugt mit einem vertikalen Abstand zu einer Öffnungsebene des Gefäßes, welcher Abstand bevorzugt einem Zwanzigstel bis einem Fünftel des größten Durchmessers im Bereich des Gefäßrandes entspricht.

Das Verriegelungsteil weist einen Übergreifabschnitt auf, der in der Verriegelungsstellung über den Deckelrand zur Sicherung desselben geführt ist. Bevorzugt wird in diesem Zusammenhang, dass sich im Verriegelungszustand an dem Verriegelungsteil in Umfangsrichtung des Deckelrandes beabstandet mindestens zwei Übergreifabschnitte einstellen. So ist in der Verriegelungsstellung mittels eines Verriegelungsteiles ein sicherndes Übergreifen des Deckels bzw. des Deckelrandes an zwei in Umfangsrichtung zueinander beabstandeten Punkten erreicht. Bevorzugt übergreift jeder Übergreifabschnitt den Deckelrand mit einem vertikalen Spiel im Zehntel-Millimeter-Bereich, weiter bevorzugt mit einem vertikalen Spiel von 0,1 bis 1 mm, wobei weiter das Spiel so gewählt ist, dass eine vertikale Beweglichkeit des Deckels im Betrieb der Küchenmaschine zugelassen wird, ohne hierbei jedoch die durch die bevorzugte Radialdichtung sichergestellte Dichtigkeit zu beeinträchtigen. Zufolge des bevorzugt vorgesehenen Vertikalspiels zwischen Übergreifabschnitt und Deckelrand überfängt der Übergreifabschnitt im Zuge der Verriegelungsverlagerung des Verriegelungsteiles sowie in der Verriegelungsstellung frei ohne reib- oder kraftschlüssige Zusammenwirkung mit dem Deckelrand.

Die äußersten Verriegelungsbereiche des Verriegelungsteiles sind weiter bevorzugt im Verriegelungszustand um 1/10 bis 1/2 des Deckeldurchmessers zueinander beabstandet, weiter bevorzugt um 1/8 bis 1/3, weiter bevorzugt um 1/4 des Deckeldurchmesser bzw. des mittleren, quer zur vertikalen Achse des Gargefäßes betrachteten Erstreckungsmaßes des Deckels.

Zudem ist bevorzugt, dass das Verriegelungsteil den Deckelrand im Querschnitt kreisbogenartig über einen Bereich von 30 bis 90° überdeckt und/oder sich zu diesem bewegt, wobei weiter bevorzugt insbesondere ein Übergreifabschnitt konzentrisch zu der Drehachse des Verriegelungsteiles ausgerichtet ist. Weiter bevorzugt erstrecken sich in einem Vertikalschnitt, weiter bevorzugt in Gefäß- und Deckelzuordnungsstellung auch der Gefäßrand und/oder der Deckelrand zumindest annähernd konzentrisch zu der Drehachse des Verriegelungsteiles, wobei insbesondere bei einer entsprechenden Vertikalquerschnittausgestaltung des Deckelrandes zufolge der bevorzugt konzentrischen Ausrichtung von Deckelrand und Übergreifabschnitt Letzterer den Deckelrand weiter bevorzugt über den gesamten Verlagerungsweg mit einem vertikalen Abstand von wenigen zehntel Millimetern überfängt.

Sowohl die Verriegelungsstellung als auch die Freigabestellung des Verriegelungsteils sind weiter bevorzugt anschlagbegrenzt, dies insbesondere zufolge konstruktiver Maßnahmen am Verriegelungsteil und/oder an den mit dem Verriegelungsteil zusammenwirkenden Partnern, wie Gargefäß und/oder Deckel. Die Drehbegrenzung des Verriegelungsteils kann weiter auch insbesondere bei einem elektromotorischen Antrieb zufolge Ausgestaltung des Elektromotors als Stellmotor gebildet sein, welcher Stellmotor nur eine drehbegrenzte Verlagerung des Verriegelungsteiles zulässt. Ist der Anschlag in der Verriegelungsstellung am Deckel ausgebildet, so kann dieser zugleich auch als Detektionsmittel dienen. Ist eine insbesondere elektromotorische Verlagerung des Verriegelungsteiles über die Anschlagstellung hinaus ermöglicht, so fehlt der Anschlag und somit der Deckel, welcher zu weite Verriegelungsweg mittels einer entsprechenden Sensorik erfasst wird.

In einer Ausgestaltung sind zwei Verriegelungsteile bezüglich einer Mittelachse des Gargefäßes gegenüberliegend angeordnet, womit insgesamt eine zumindest Vier-Punkt-Verriegelung des Deckels an dem Gargefäß erreicht ist. Hierbei verlaufen die Achsen der beiden Verriegelungsteile bevorzugt parallel zueinander. Alternativ ist gegenüberliegend zu dem Verriegelungsteil, insbesondere zu einem Verriegelungsteil ein feststehender Übergriff ausgebildet. Dieser wird durch den Gefäßrand oder, wie weiter bevorzugt, durch die Küchenmaschine angeboten, woraus entsprechend bei Anordnung nur eines Verriegelungsteiles insgesamt eine zumindest Drei-Punkt-Verriegelung des Deckels erreicht ist. Weiter alternativ kann der feststehende Übergriff auch im Bereich eines mit dem Gargefäß verbundenen, insbesondere sich im Wesentlichen vertikal erstreckenden Handgriffes ausgeformt sein.

Weiter alternativ sind zwei gegenüberliegende Verriegelungsteile vorgesehen, wobei die Achsen der Verriegelungsteile mit Bezug auf eine Draufsicht auf das Gargefäß bzw. auf den Deckel einen spitzen Winkel einschließen, so insbesondere einen spitzen Winkel von 30 bis 60°, weiter bevorzugt etwa 45°. Hierdurch sind über den Umfang verteilt mindestens vier den Deckelrand übergreifende Abschnitte vorgesehen, wobei in einer weiter bevorzugten Ausgestaltung mit Bezug auf eine Draufsicht gegenüberliegend zu einem Schnittpunkt der beiden Verriegelungsachsen ein feststehender Übergriff vorgesehen ist, woraus entsprechend sich eine bevorzugte 5-Punkt-Verriegelung des Deckels ergibt.

Bevorzugt wird weiter, dass das Gargefäß in vertikaler Richtung durch das Verriegelungsteil gehalten wird, um so notwendige Längetoleranzen zwischen Gargefäß und dem das Gargefäß aufnehmenden Gehäuse der Küchenmaschine gezielt auf der Gefäßunterseite ausgleichen zu können. Hierzu ist vorgesehen, dass das Verriegelungsteil einen oder mehrere Auflagebereiche für den Gefäßrand aufweist, so dass das Gargefäß in bevorzugter Ausgestaltung quasi hängend an dem, weiter bevorzugt an den Verriegelungsteilen hängt, dies weiter bevorzugt bei entsprechender umlaufender Fassung des Gargefäßes insbesondere im unteren, dem Gefäßboden zugewandten Bereich. Der Auflagebereich ist bevorzugt kugelkopfartig oder ballig ausgebildet, weiter insbesondere mit Bezug auf einen Vertikalquerschnitt ausgebildet zur formschlüssigen Abstützung des entsprechend formangepassten Gefäßrandes. Dieser Auflagebereich ist in Bezug auf die Längserstreckung des Verriegelungsteiles bevorzugt mittig zwischen den äußersten Verriegelungsbereichen ausgebildet, so dass entsprechend nach einer Verlagerung des Verriegelungsteiles in die Verriegelungsstellung die Übergreifabschnitte in Umfangsrichtung des Deckels betrachtet beidseitig des Auflagebereiches gleichmäßig zu diesem beabstandet den Deckelrand übergreifen.

In weiterer Ausgestaltung weist das Verriegelungsteil bevorzugt zwei über den Umfang des Gefäßrandes versetzte Auflagebereiche für den Gefäßrand auf, dies weiter bevorzugt im Zusammenhang mit einer geometrischen Achse, die die Gefäßwandung durchsetzt. Diese bevorzugten zwei Auflagebereiche sind weiter bevorzugt in Erstreckungsrichtung der Achse betrachtet vor und hinter den Durchdringungsstellen der geometrischen Achse durch die Gefäßwandung ausgebildet, dies weiter bevorzugt punktartig, darüber hinaus, wie auch bevorzugt bei nur einem Auflagebereich, linienförmig. Hierdurch ist insbesondere eine Reinigung eines so ausgebildeten Verriegelungsteiles weiter verbessert. Darüber hinaus ist durch die bevorzugte Anordnung von zwei Auflagebereichen weiter insbesondere bei Anordnung von zwei Verriegelungsteilen eine insgesamt zumindest Vier-Punkt-Auflage erreicht, wodurch in bevorzugter Ausgestaltung eine genügende Stabilität erreicht ist.

Das Verriegelungsteil dient weiter bevorzugt in der Deckelfreigabestellung zur Aufnahme und Halterung des Deckels in einer zumindest annähernden Vertikalausrichtung des Deckels, so dass Letzterer auf dem umlaufenden Gefäßrand mittels des Deckelrandes abgestellt werden kann, so dass beispielsweise durch die nunmehr frei liegende Gefäßöffnung weitere Rezeptzutaten beigefügt werden können. Etwaige Verschmutzungen auf der Deckelinnenseite können über den Gefäßrand zurück in das Gargefäß laufen ohne hierbei die Umgebung zu verschmutzen. Der Deckel stützt sich hierbei auf einem Abschnitt der umlaufenden Deckelrandkante insbesondere auf dem Auflagebereich des Verriegelungsteiles ab, wobei eine radial innere Abstützung durch den Gefäßrand und einer radial äußere Abstutzung durch einen Abschnitt des Verriegelungsteiles gegeben ist, weiter insbesondere durch den in die Entriegelungsstellung verbrachten Übergreifabschnitt.

Bezüglich aller angegebenen Wertebereiche sind alle Zwischenwerte, insbesondere in 1-mm- und/oder 1-Fach- und/oder 1-Grad-Schritten sowohl hinsichtlich einer ein- oder mehrfachen Einengung der angegebenen Bereichsgrenzen in beispielsweise der angegebenen Schrittweite, von oben und/oder von unten, wie auch zur Darstellung singulärer Werte innerhalb der angegebenen Bereiche hiermit in die Offenbarung eingeschlossen.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in einer schematischen Schnittdarstellung den Zusammenwirkungsbereich eines Gefäßes mit einem Deckel mit an dem Gefäß angeordneten Verriegelungsteil;
- Fig. 2: eine Küchenmaschine der in Rede stehenden Art in Seitenansicht mit einem deckelverschlossenen Gargefäß;
- Fig. 3: die Ansicht gemäß Pfeil III in einer Ausschnittdarstellung;
- Fig. 4: die Draufsicht zu Fig. 2;
- Fig. 5: den schematisch dargestellten Schnitt gemäß der Linie V-V in Fig. 4, eine Deckelverriegelungsstellung betreffend;
- Fig. 6: eine der Fig. 5 entsprechende Darstellung, die Deckelentriegelungsstellung betreffend;
- Fig. 7: eine der Fig. 6 entsprechende Darstellung bei abgenommenem Deckel;
- Fig. 8: ein Verriegelungssteil zur Festlegung des Deckels in perspektivischer Darstellung;
- Fig. 9: eine weitere perspektivische Darstellung des Verriegelungsteiles;
- Fig. 10: eine weitere der Fig. 5 entsprechende schematische Schnittdarstellung, die Stellung gemäß Fig. 6 betreffend, bei Anordnung des Deckels in einer die Gefäßöffnung freigebenden Aufstellstellung;
- Fig. 11: eine Draufsicht gemäß Fig. 4, eine zweite Ausführungsform betreffend;
- Fig. 12: eine weitere der Fig. 4 entsprechende Draufsicht, betreffend eine dritte Ausführungsform;
- Fig. 13: eine der Fig. 8 entsprechende Darstellung, eine zweite Ausführungsform eines Verriegelungsteils betreffend;
- Fig. 14: eine der Fig. 4 entsprechende Darstellung, die zweite Ausführungsform des Verriegelungsteils gemäß Fig. 13 betreffend;
- Fig. 15: das Verriegelungsteil in perspektivischer Darstellung, eine weitere Ausführungsform betreffend;
- Fig. 16: eine der Fig. 4 entsprechende Darstellung, die Ausführungsform gemäß Fig. 15 betreffend.

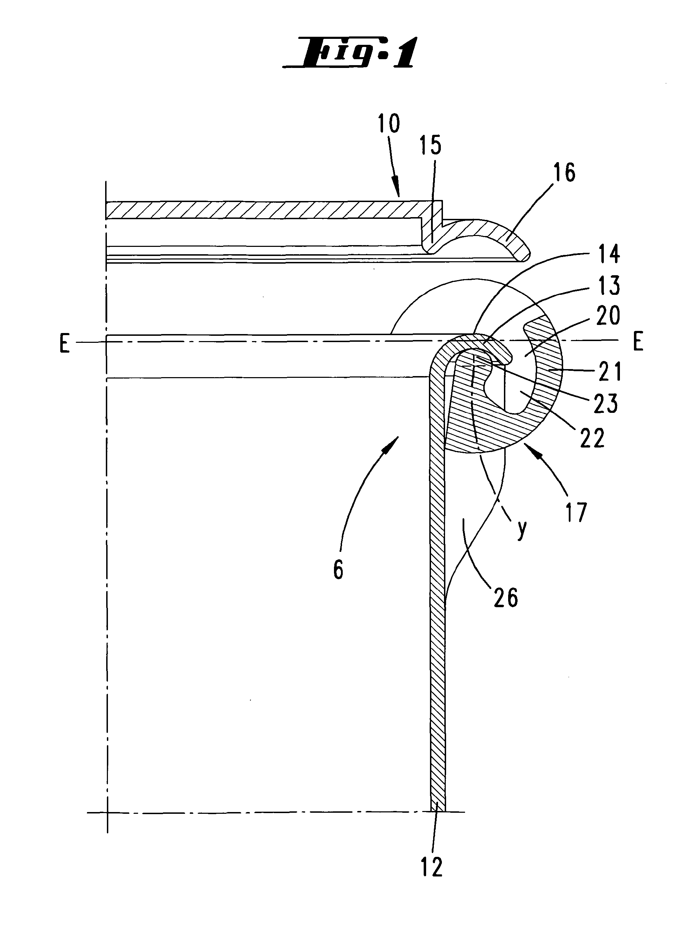

Dargestellt und beschrieben ist zunächst mit Bezug zur Fig. 1 in einer schematischen Vertikalschnittdarstellung den Zusammenwirkungsbereich eines Gefäßrandes 13 eines bevorzugt frei aufstellbaren Gefäßes 6, welchem Gefäßrand zum Verschluss des Gefäßes 6 ein Deckel 10 zuordbar ist. Letzterer weist einen in Überdeckung zu dem Gefäßrand 13 verbringbaren Deckelrand 16 auf.

Wandungsaußenseitig der Gefäßwandung 12 ist eine Halterung 26 befestigt, an welcher Halterung 26 ein, wie nachstehend näher beschriebenes, Verriegelungsteil 17 schwenkbeweglich gehaltert ist.

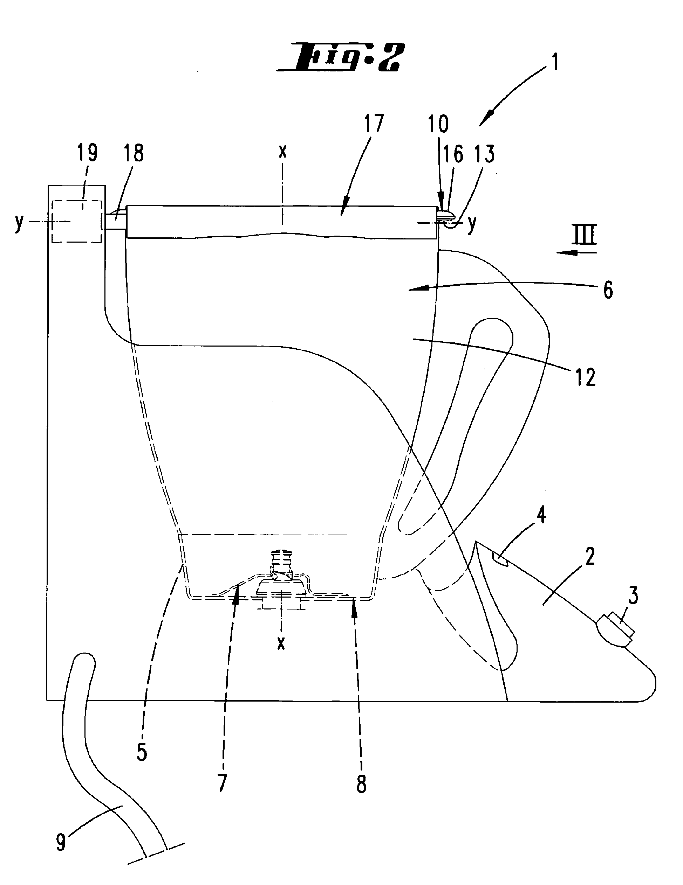

Die beispielhafte Ausgestaltung und Wirkungsweise des Verriegelungsteiles 17 ist nachstehend anhand der Fig. 2 bis 12 näher erläutert, wobei zunächst mit Bezug zu Fig. 2 eine elektrisch betriebene Küchenmaschine 1 dargestellt und beschrieben ist.

Diese weist zunächst ein Bedienfeld 2 auf mit bevorzugt einer Mehrzahl von Reglern und/oder Tastern 3 sowie bevorzugt ein Display 4 zum Anzeigen der insbesondere über die Regler und/oder Taster 3 einzustellenden Parametern.

Des Weiteren verfügt die Küchenmaschine 1 über eine Gefäßaufnahme 5.

In diese ist ein Gefäß 6 in Form eines Garfäßes insbesondere im Fußbereich desselben bevorzugt formschlüssig aufnehmbar und halterbar.

Das Gefäß 6 ist bevorzugt im Wesentlichen rotationssymmetrisch ausgebildet, mit einer zentralen Vertikalachse x.

Im Bodenbereich weist das Gefäß 6 bevorzugt ein Rührwerk 7 auf. Dieses ist in der Zuordnungsstellung des Gefäßes 6 in der Gefäßaufnahme 5 formschlüssig gekoppelt mit einem in der Küchenmaschine 1 vorgesehenen Rührwerkantrieb.

Die Elektroversorgung des Rührwerkantriebs sowie einer weiter bevorzugt behälterbodenseitig vorgesehenen Heizung 8 und darüber hinaus auch der elektrischen Steuerung der gesamten Küchenmaschine 1 ist über ein Netzanschlusskabel 9 erreicht.

Das Gefäß 6 ist weiter insbesondere im Betrieb des Rührwerks 7 und/oder der Heizung 8 durch einen Deckel 10 verschlossen. Dieser weist bevorzugt zentral, die Vertikalachse x des Gefäßes 6 aufnehmend, eine Einfüllöffnung 11 auf, dies weiter bevorzugt bei insgesamt im Wesentlichen kreisscheibenförmigem Grundriss des Deckels 10.

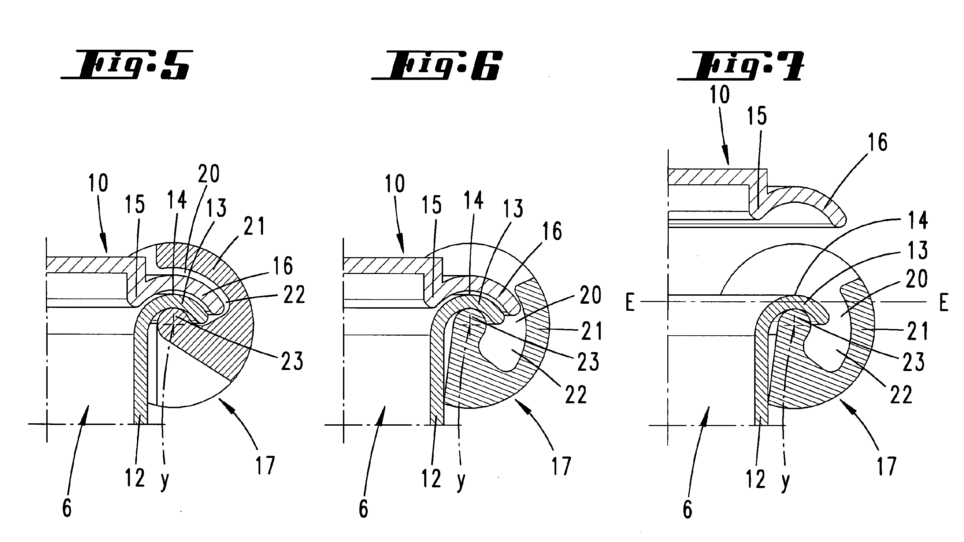

Das Gefäß 6 weist eine vom Bodenbereich sich in Vertikalrichtung nach oben erstreckende Gefäßwandung 12 auf, die gefäßöffnungsseitig in einen nach radial außen abragenden Gefäßrand 13 übergeht. Letzter ist mit Bezug auf einen Vertikalquerschnitt (vgl. Fig. 6) kreislinienabschnittförmig gebildet, weiter bevorzugt halbkreislinienförmig, mit einer nach vertikal oben gerichteten Wölbungsfläche 14.

Der Deckel 10 ist unterseitig, d. h. in Zuordnungsstellung dem Gefäßinneren zugewandt, mit einem sich im Wesentlichen koaxial zur Vertikalachse x erstreckenden umlaufenden Kragen 15 versehen. Fußseitig des Kragens 15, entsprechend entlang der in Zuordnungsstellung dem Gefäßinneren zugewandten Kragenrandkante, ist ein nach radial außen sich erstreckender Deckelrand 16 angeformt. Dieser erstreckt sich mit Bezug auf einen Vertikalschnitt gemäß Fig. 6 angepasst an den Gefäßrand 13 kreislinienabschnittförmig, weiter bevorzugt in Zuordnungszustellung des Deckels 10 unter konzentrischem Verlauf zu dem Gefäßrand 13. In der Zuordnungsstellung stützt sich der Deckel 10 über dessen Deckelrand 16 auf dem Gefäßrand 13 ab (vgl. Fig. 5).

Wenngleich nicht dargestellt, ist an dem Deckel 10 oder im Bereich des Gefäßrandes 13 eine Dichtung vorgesehen, insbesondere zur fluiddichten Anordnung des Deckels 10 auf dem Gefäß 6. In üblicher Weise besteht eine solche Dichtung aus einem Weichkunststoffmaterial, beispielsweise aus einem thermoplastischen Elastomer.

Insbesondere im Betrieb der Küchenmaschine, weiter insbesondere im Rührwerk- und/oder Heizbetrieb ist der auf das Gefäß 6 aufgesetzte Deckel 10 zu verriegeln, da im Betrieb der Küchenmaschine 1 gegebenenfalls hohe Kräfte beispielsweise durch einen Zerkleinerungsprozess mittels des Rührwerks 7 und/oder durch eine Fluiddynamik im Gefäß 6 entstehen können. Hierzu weist die Küchenmaschine 1 mindestens ein Verriegelungsteil 17 auf, welches den Deckel 10 gegen das Gefäß 6 verriegelt. Dieses Verriegelungsteil 17 ist bevorzugt langgestreckt, wellenartig ausgebildet, mit einer zentralen, in Längserstreckung ausgerichteten Achse, welche zugleich eine Drehachse y des Verriegelungsteiles 17 darstellt. Letztere erstreckt sich weiter parallel zu einer durch den Deckelrand 16 bzw. durch den Gefäßrand 13 aufgespannten Ebene E.

Weiter ist die Anordnung der Drehachse y so gewählt, dass diese sich radial außerhalb des Gefäßrandes 13, weiter in vertikaler Überdeckung zu dem Gefäßrand 13 unterhalb desselben erstreckt. Hierbei ist weiter bevorzugt, dass die Drehachse y mit Bezug auf einen Vertikalschnitt gemäß Fig. 6 den Mittelpunkt des kreislinienabschnittförmigen Gefäßrandes 13 schneidet.

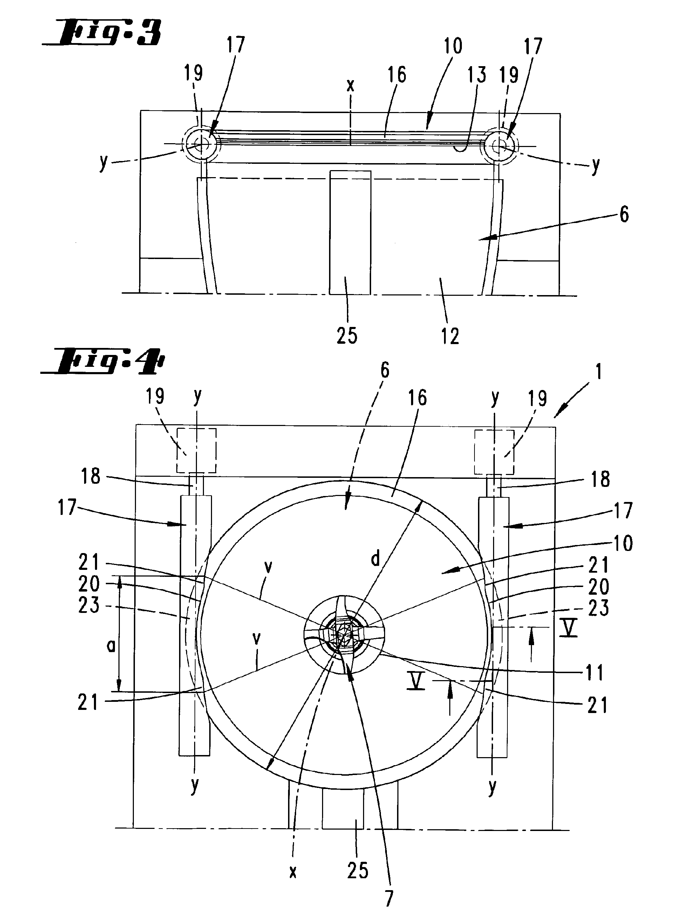

Das insgesamt langgestreckt zylinderförmige Verriegelungsteil 17 ist zufolge der vorbeschriebenen Anordnung und Ausrichtung der Drehachse y derart angeordnet, dass dieses mit Bezug auf eine Draufsicht (vgl. Fig. 4) den Gargefäßrand 13 sowie in Zuordnungsstellung den Deckelrand 16 sekantenartig schneidet, wobei in dem dargestellten Ausführungsbeispiel die axiale Länge des Verriegelungsteiles 17 so gewählt ist, dass beide Endbereiche desselben mit Bezug auf eine Draufsicht frei über den sekantenartig, partiell umfassten Randbereich hinausragen.

Ein Ende des Verriegelungsteiles 17 ist über einen Wellenstumpf 18 mit einem in der Küchenmaschine 1 angeordneten Elektromotor 19 verbunden. Wie dargestellt, kann die Anordnung des Elektromotors 19 so gewählt sein, dass dessen Drehachse mit der Drehachse y des Verriegelungsteiles 17 zusammenfällt. Alternative Lösungen sehen diesbezüglich eine Anordnung eines solchen Elektromotors 19 beispielsweise im Sockelbereich der Küchenmaschine 1 vor, wobei in diesem Fall eine Übersetzung in die Ebene der Drehachse y vorgesehen ist, beispielsweise mittels eines Riementriebs oder dgl.

Über den Wellenstumpf 18 ist das Verriegelungsteil 17 an der Küchenmaschine 1 um die Achse y drehbar festgelegt, dies weiter bei insgesamt frei auskragender Anordnung desselben.

Das insgesamt wellenartige Verriegelungsteil 17 ist weiter mit einer sich in dem dargestellten Ausführungsbeispiel etwa über bevorzugt 60 bis 70 % der axialen Länge des Verriegelungsteiles 17 erstreckenden Höhlung 20 versehen. Dies ist so gestaltet, dass sich jeweils zugeordnet den in axialer Richtung betrachteten Endbereich der Höhlung 20 mit Bezug auf einen Vertikalschnitt, d. h. mit Bezug auf einen senkrecht zur Drehachse y betrachteten Schnitt, ein kreisbogenartiger Übergreifabschnitt 21 einstellt. Dieser erstreckt sich bevorzugt konzentrisch zur Drehachse y, wobei der von dem Übergreifabschnitt 21 überdeckte Höhlungsabschnitt 22 hinsichtlich seiner Radialerstreckung als auch hinsichtlich seiner Erstreckung in Umfangsrichtung ausgelegt ist, zur formschlüssigen Aufnahme des Gefäßrandes 13 sowie des Deckelrandes 16 des auf dem Gefäß 6 aufgesetzten Deckels 10. Der hierbei mit Bezug auf einen Vertikalschnitt sich freikragend erstreckende Übergreifabschnitt 21 erstreckt sich bevorzugt kreisbogenartig, in dem dargestellten Ausführungsbeispiel über einen Bereich von etwa 80 bis 85°.

Die sich zufolge der vorbeschriebenen Ausgestaltung einstellenden Verriegelungsbereiche im Bereich der Übergreifabschnitte 21 sind in Erstreckungsrichtung der Drehachse y betrachtet um ein Maß a zueinander beabstandet, welches in dem dargestellten Ausführungsbeispiel etwa einem Drittel des Deckeldurchmessers d entspricht.

Weiter in Erstreckungsrichtung der Drehachse y betrachtet ist mittig zwischen den Übergreifabschnitte 21 ein Auflagebereich 23 ausgebildet. Dieser ist bevorzug kugelkopfartig oder ballenartig ausgeformt, insbesondere mit Bezug auf einen Vertikalschnitt gemäß Fig. 6 mit einer Auflagefläche, welche konzentrisch zur Drehachse y verläuft und somit weiter bevorzugt in entsprechender Zuordnungsstellung konzentrisch zu dem Verlauf des Gargefäßrandes 13 und/ oder des Deckelrandes 16 in einem Vertikalschnitt.

In dem Auflagebereich 23 ist die Höhlung 20 so gebildet, dass in einer Deckelfreigabestellung gemäß Fig. 6 sich oberhalb des Auflagebereiches 23 ein freies vertikales Anheben bzw. Absenken des Gefäßes 6 sowie des Deckels 10 erreichbar ist. Zufolge der insgesamt kreisscheibenförmigen Ausgestaltung des Deckels 10 ist dieser ungerichtet dem Gefäßrand zuordbar.

Die Drehachse y des Verriegelungsteils 17 erstreckt sich durch das Zentrum des Auflagebereiches 23, um so bei einer Rotation des Verriegelungsteiles 17 die Gefäßposition konstant zu halten.

In der Zuordnungsstellung (vgl. Fig. 6) lagert auf der ballig bis kugelig ausgeführten Fläche des Auflagebereiches 23 der Gefäßrand 13, wobei das Gefäß 6 vertikal durch das Verriegelungsteil 17 gehalten ist, um etwaige Längentoleranzen zwischen Gefäß 6 und Gefäßaufnahme 5 gezielt auf der Gefäßunterseite ausgleichen zu können.

Zum Betrieb der Küchenmaschine 1 wird der Deckel 10 aufgelegt, dies unter unmittelbarer Abstützung des Deckelrandes 16 auf dem Gefäßrand 13, gegebenenfalls mittelbar unter Zwischenschaltung einer Dichtung.

Zufolge Rotation des Verriegelungsteiles (über Elektromotor 19, gegebenenfalls manuell) werden die in Axialrichtung zueinander distanzierten Übergreifabschnitte 21 über den Deckelrand 16 verlagert bis hin in eine Endstellung gemäß Fig. 5, in welcher der verriegelte Zustand des Deckels 10 erreicht ist. Bevorzugt wird hierbei keine axiale Verspannung vom Gefäß 6 und Deckel 10 erreicht. Vielmehr wird bevorzugt allein sichergestellt, dass das Gefäß 6 und der Deckel 10 im verriegelten Zustand auch durch hohe Kräfte nicht zu trennen sind. Die Dichtigkeit wird durch die erwähnte Radialdichtung sichergestellt.

Wie weiter bevorzugt sind gemäß dem in den Figuren 1 bis 9 dargestellten ersten Ausführungsbeispiel zwei Verriegelungsteile 17 vorgesehen, die mit Bezug auf eine Draufsicht gemäß Fig. 4 gegenüberliegend angeordnet sind, dies bei paralleler Ausrichtung der Drehachsen y zueinander. Zufolge dieser Anordnung ist bedingt durch die jeweils zwei ausgebildeten Übergreifabschnitte 21 je Verriegelungsteil 17 eine insgesamt Vier-Punkt-Verriegelung des Deckels 10 erreicht. Hieraus ergibt sich, dass sich das Gargefäß 6 über den Gargefäßrand 13 zunächst auf zwei um 180° gegenüberliegenden Auflagenbereichen 23 abstützt, so dass mit Bezug auf eine Draufsicht die die Verriegelungsbereiche miteinander verbindenden Linien v sich im Bereich der Vertikalachse x des Gefäßes 6 schneiden, wobei weiter der Schnittpunkt der Verbindungslinien v senkrecht oberhalb des Gefäßschwerpunktes liegt Hierdurch wird erreicht, dass das Gefäß 6 kein abstützendes Kippmoment aufbaut, welches an anderer Stelle abgestützt werden müsste.

Insbesondere zufolge der in Erstreckungsrichtung der Drehachse y zueinander beabstandet ausgebildeten Übergreifabschnitte 21 bzw. Verriegelungsbereiche ist erreicht, dass der Kraftfluss von den Auflagebereichen 23 der Verriegelungsteile 17 unter den Gefäßrand 13 durch das jeweilige Verriegelungsteil 17 zu den Übergreifabschnitten 21 und darüber auf den Deckel 10 aufgebracht werden. Hierdurch werden in dem dargestellten Ausführungsbeispiel vier Andruckstellen auf dem Umfang des Deckels 10 gebildet. Gefäß 6 sowie die Verriegelungsteile 17 weisen die notwendige Steifigkeit für die Verteilung der Kraft auf, was in vorteilhafter Weise zu einer Erweiterung der Werkstoffwahl für den Deckel 10 führt.

Auflagebereich 23 und Verriegelungsbereich bzw. Übergreifabschnitt 21 können in einer gemeinsamen Querebene zur Drehachse y ausgebildet sein. Eine solche Lösung erweist sich jedoch insbesondere im Bereich des sich hierbei einstellenden Höhlungsabschnittes 22 als verschmutzungsgefährdet, welcher Höhlungsabschnitt 22 weiter zur Reinigung schwer zugänglich ist. Zum Weiteren würde sich bei einer solchen Lösung je Verriegelungsteil 17 nur ein Verriegelungsbereich einstellen, was sich insbesondere bei einer Deformation oder einem Nachgeben des Deckels 10 insbesondere hinsichtlich der Dichtfunktion als nachteilig erweisen kann. Durch die vorgeschlagene axiale Entzerrung der Verriegelung (axial zueinander beabstandete Verriegelungsbereiche bzw. Übergreifabschnitte 21) ist der enge, verschmutzungsgefährdete Spalt (Hüllungsabschnitt 22) zwischen Auflagebereich 23 und Übergreifabschnitt 21 aufgehoben. Der Auflagebereich 23 ist durch die entsprechende Ausformung der Höhlung 20 frei zugänglich, was insbesondere die Reinigung des Verriegelungsteiles 17 erleichtert.

Wie weiter insbesondere aus der Schnittdarstellung in Fig. 5 zu erkennen, überfängt der Übergreifabschnitt 21 den Deckelrand 16 und den Gefäßrand 13, mit Bezug auf die Drehachse y, mit radialem Spiel von bevorzugt 0,5 bis 2 mm, weiter bevorzugt etwa 1 mm, womit sichergestellt ist, dass beispielsweise durch Toleranzen bezüglich der Geometrie der Verriegelungsbereiche der Verriegelungsteile 17 und/oder durch Toleranzen bezüglich der Lage der Verriegelungsteile 17 in oder an der Küchenmaschine 1 im Zuge des Verriegelns kein ungewolltes Kippmoment in das Gefäß 6 eingeleitet wird, wenn das Spiel zwischen Verriegelungsteil 17 und Deckel 10 zu klein ist oder sogar gegen Null tendiert. Der Deckel 10 kann sich im Rahmen des gegebenen Spiels mit Bezug auf die Vertikalachse x des Gefäßes 6 axial bewegen, ohne dass die durch die Radialdichtung sichergestellte Dichtigkeit beeinträchtigt wird.

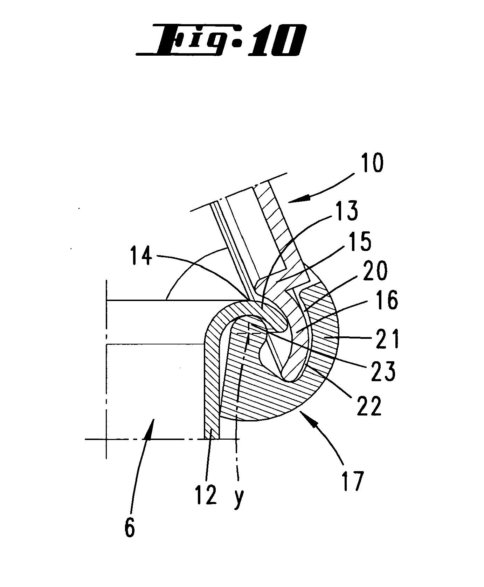

Die Ausgestaltung der Verriegelungsteile 17, weiter insbesondere eines Verriegelungsteils 17, weiter insbesondere hinsichtlich der Höhlung 20 und des Auflagebereiches 23 ist weiter so gewählt, dass gemäß der Darstellung in Fig. 10 der Deckel 10 beispielsweise zum Hinzufügen weiterer Rezeptzutaten in das Gargefäß 6 hochkant abgestellt werden kann, wobei der Deckelrand 16 in den Höhlungsabschnitt 22 eingreifend sich mit Bezug auf die Vertikalachse x radial innen über den Deckelrand 16 an der zugewandten Randfläche des Gefäßrandes 13 oder alternativ radial außen im Bereich des Kragens 15 an der freien Stirnkante des Übergreifabschnitte 21 abstützt. Etwaige an der Deckelunterseite anhaftende Verschmutzungen (beispielsweise Kondensat) können in dieser Deckelstellung über den Gefäßrand 13 zurück in das Gargefäß 6 laufen.

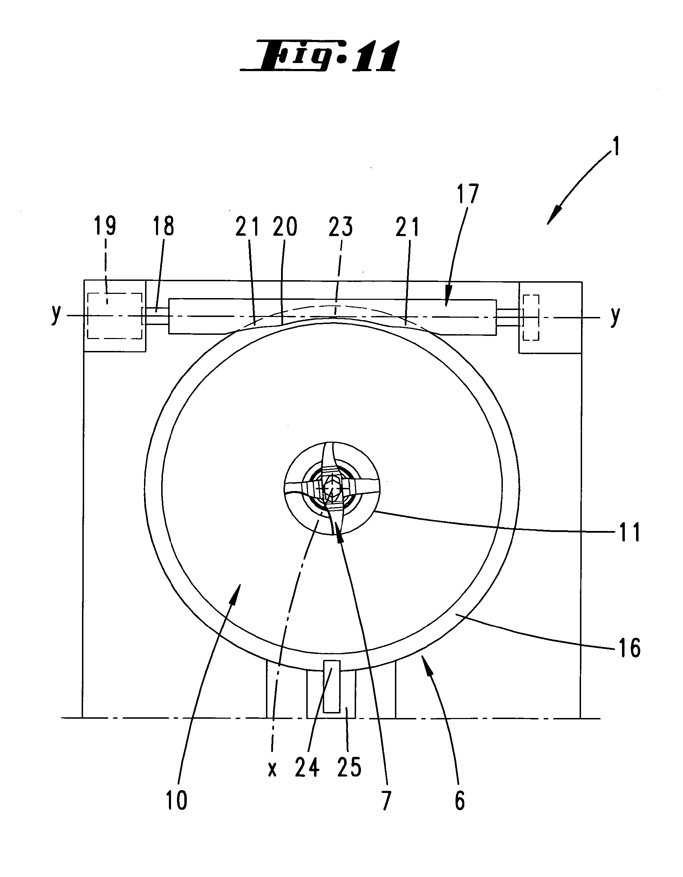

In Fig. 11 ist eine alternative Ausführungsform dargestellt. In dieser ist nur ein wie vorbeschriebenes Verriegelungsteil 17 vorgesehen, welches andernends, gegenüberliegend zur Antriebsseite küchenmaschinenseitig gelagert ist. Mit Bezug auf eine Draufsicht ist diametral gegenüberliegend zu dem Verriegelungsteil 17 ist ein feststehender Übergriff 24 ausgebildet. Dieser ist beispielsweise an der Küchenmaschine 1 ausgeformt, weiter bevorzugt im vertikal oberen Endbereich eines an dem Gefäß 6 befestigten Griffes 25. Der Übergriff 24 ist so gestaltet, dass dieser in der aufgesetzten Stellung 10 des Deckels auf den Gefäßrand 13 den Deckelrand 16 überfängt, wobei allein dieser Übergriff 24 keine Verriegelung darstellt. Diese ist erst erreicht zufolge entsprechender Drehverlagerung des gegenüberliegenden Verriegelungsteiles 17. Zufolge dieser Ausgestaltung ist eine Drei-Punkt-Verriegelung des Deckels 10 erreichbar.

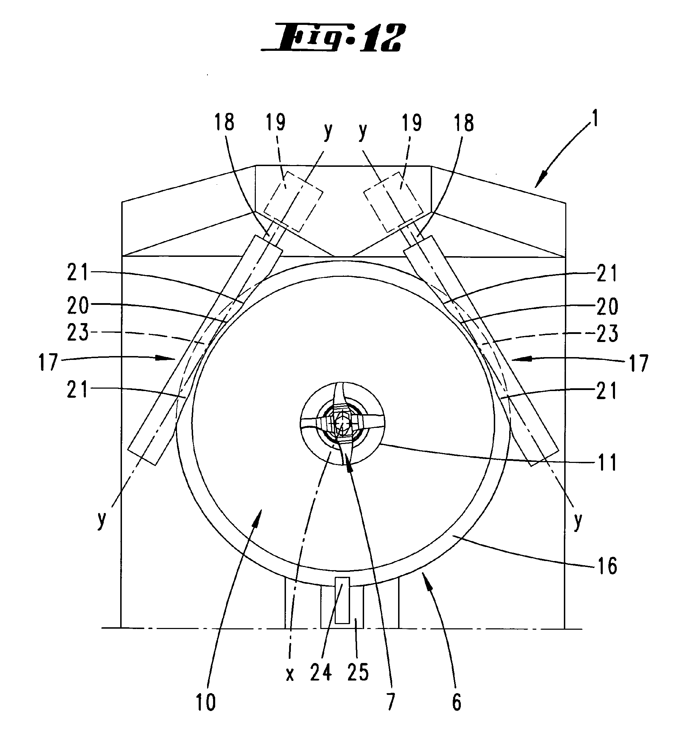

Weiter alternativ sind gemäß der Darstellung in Fig. 12 zwei Verriegelungsteile 17 vorgesehen, deren Drehachsen y mit Bezug auf eine Draufsicht einen spitzen Winkel von etwa 60° einschließen, welche Drehachsen y sich in einer gemeinsamen Ebene erstrecken. Diametral gegenüberliegend zu dem Schnittpunkt der beiden Drehachsen y ist ein feststehender Übergriff 24 ausgebildet, woraus sich entsprechend eine insgesamt Fünf-Punkt-Verriegelung ergibt.

Der Deckel 10 wird im Zuge des Aufsetzens auf das Gefäß 6 unter den Übergriff 24 untergehakt.

Zufolge der bevorzugt insgesamt kreisscheibenförmigen Ausgestaltung des Deckels 10 sowie der entsprechend angepassten Ausgestaltung des Gefäßes 6 im Bereich des Gefäßrandes 13 ist ein ungerichtetes Aufsetzen des Deckels 10 ermöglicht.

Zur Betätigung des Verriegelungsteiles 17, d. h. zur Drehverlagerung desselben aus einer Freigabestellung gemäß Fig. 7 in die Verriegelungsstellung gemäß Fig. 5 und zurück ist ein geringes Antriebsmoment nötig. Dies bietet die Möglichkeit einer automatischen Verriegelung des Deckels 10, insbesondere eine Verriegelung, welche mit Inbetriebnahme der Küchenmaschine 1, insbesondere mit Inbetriebnahme des Rührwerkes 7 und/oder der Heizung 8 selbsttätig durchgeführt werden kann. Die Drehendstellungen des Verriegelungsteiles 17 sind bevorzugt anschlagbegrenzt. Weiter ist insbesondere die Verriegelungsstellung des Verriegelungsteils 17 beispielsweise unter Nutzung einer entsprechenden Sensorik detektierbar, so dass eine Inbetriebnahme der Küchenmaschine 1 nur bei einem entsprechend generierten Signal ermöglicht wird. Darüber hinaus ist auch das Vorhandensein des Deckels 10 detektierbar, so dass entsprechend eine Inbetriebnahme der Küchenmaschine 1 nur bei aufgesetztem und bevorzugt verriegeltem Deckel 10 ermöglicht ist. Beispielsweise kann hierzu der Deckel 10 eine Anschlagbegrenzung der Drehverlagerung des Verriegelungsteiles 17 in die Verriegelungsstellung bieten, wobei bei fehlendem Deckel das Verriegelungsteil 17 über eine vorgegebene, detektierbare Verriegelungsstellung hinaus verlagerbar ist, was das Fehlen des Deckels 10 anzeigt.

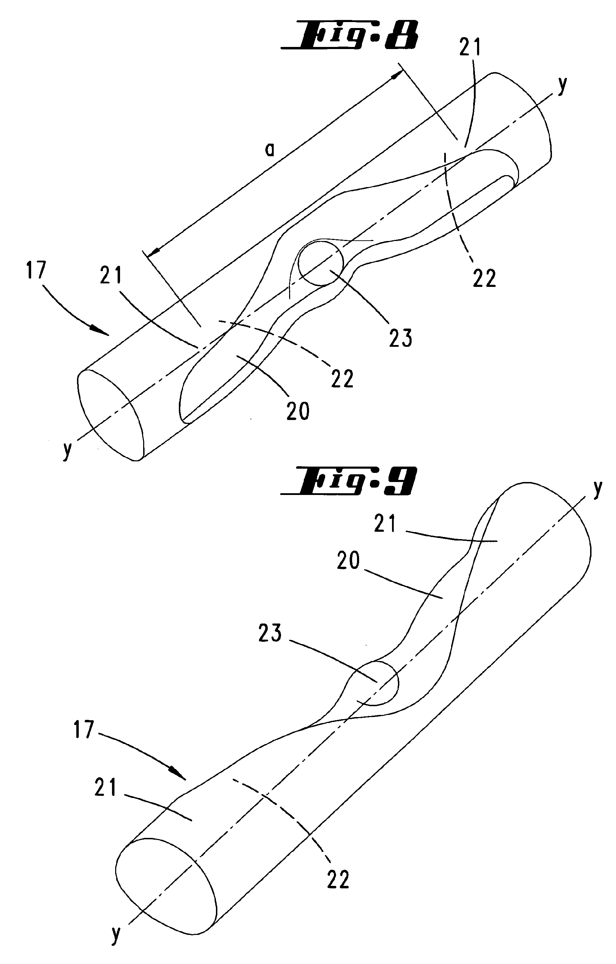

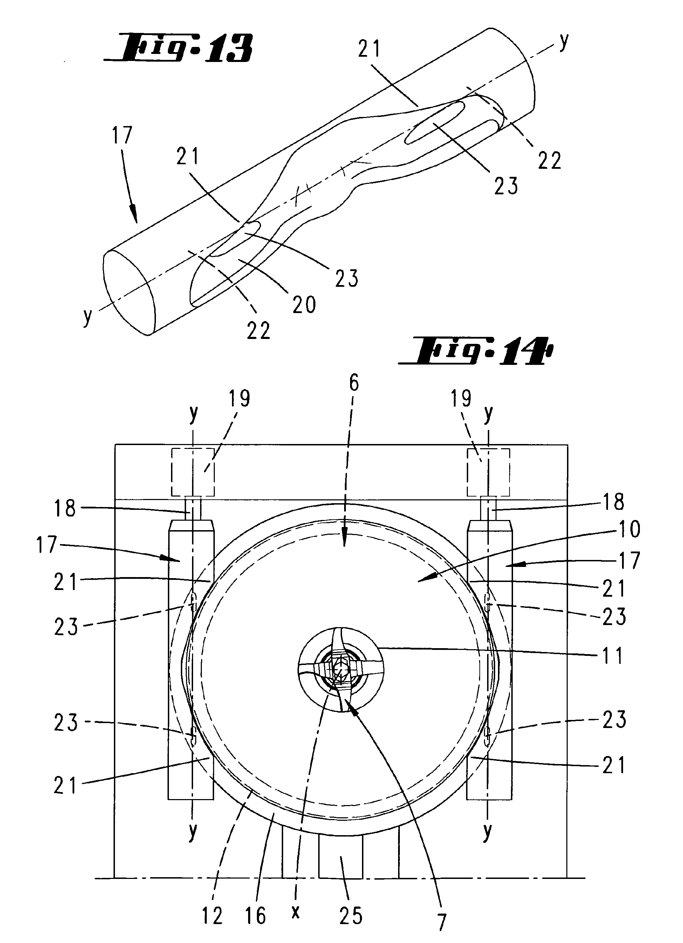

Die Figuren 13 und 14 zeigen eine weitere Ausführungsform eines Verriegelungsteiles 17. Dieses ist ausgebildet und drehbeweglich derart angeordnet, dass dessen geometrische Achse y, wie insbesondere aus der Darstellung in Fig. 14 zu erkennen, die Gefäßwandung 12 durchdringt. Entsprechend stellt sich insbesondere angriffsseitig, bevorzugt dem Wellenstumpf 18 zugeordnet zumindest partiell ein wellenartiger Achsabschnitt des Verriegelungsteiles 17 ein, der bevorzugt zentral von der geometrischen Achse y durchsetzt ist. Das Verriegelungsteil 17 ist wie das Verriegelungsteil 17 der Ausführungsform gemäß Figur 8 mit einer im wesentlichen sich in Längserstreckung des Verriegelungsteiles 17 erstreckenden Höhlung 20 versehen, welche so gestaltet ist, dass sich jeweils zugeordnet den in axialer Richtung betrachteten Endbereichen der Höhlung 20 mit Bezug auf einen Vertikalschnitt, das heißt mit Bezug auf einen senkrecht zur Drehachse y betrachteten Schnitt, ein kreisbogenartiger Übergreifabschnitt 21 einstellt. Auch dieser erstreckt sich bevorzugt konzentrisch zur Drehachse y, wobei der von dem Übergreifabschnitt 21 überdeckte Höhlungsabschnitt 22 hinsichtlich seiner Radialerstreckung als auch bevorzugt hinsichtlich seiner Erstreckung in Umfangsrichtung ausgelegt ist, zur formschlüssigen Aufnahme des Gefäßrandes 13 sowie des Deckelrandes 16 des auf dem Gefäß 6 aufgesetzten Deckels 10. Der hierbei mit Bezug auf einen Vertikalschnitt sich freikragend erstreckende Übergreifabschnitt 21 erstreckt sich kreisbogenartig, bevorzugt über einen Bereich von etwa 80° bis 85°.

Zufolge der Ausrichtung der Drehachse y zur Durchsetzung der Gefäßwandung 12 ergeben sich an dem Verriegelungsteil 17 bevorzugt zwei über den Umfang des Gefäßrandes 13 versetzte Auflagebereiche 23 für den Gefäßrand 13, welche Auflagebereiche 23 bevorzugt linienförmig, weiter bevorzugt erhaben gegenüber umgebenden Bereichen ausgebildet sind. Es ergeben sich entsprechend in Erstreckungsrichtung der Achse y betrachtet zwei zueinander versetzte Auflagebereiche für den Gefäßrand 13 je Verriegelungselement 17. Diese Auflagebereiche 23 sind in einer bevorzugten Ausgestaltung so positioniert, dass eine quer zur Achse y betrachtete Querschnittsebene durch einen Auflagebereich 23 zugleich auch den Bereich eines Übergreifabschnittes 21 schneidet.

Bevorzugt ist weiter die geometrische Achse y gegenüber einer parallel hierzu verlaufenden, die Gefäßwandung 12 wandungsaußenseitig tangierenden Geraden nach radial innen versetzt um ein Maß, welches bevorzugt mindestens der Materialstärke der Gefäßwandung 12 entspricht, weiter bevorzugt dem 0,25- bis 1-Fachen des freien Querschnitts-Erstreckungsmaßes (ausgehend von der zugeordneten Gefäßwand-Außenseite) des Gefäßrandes 13 nach radial außen.

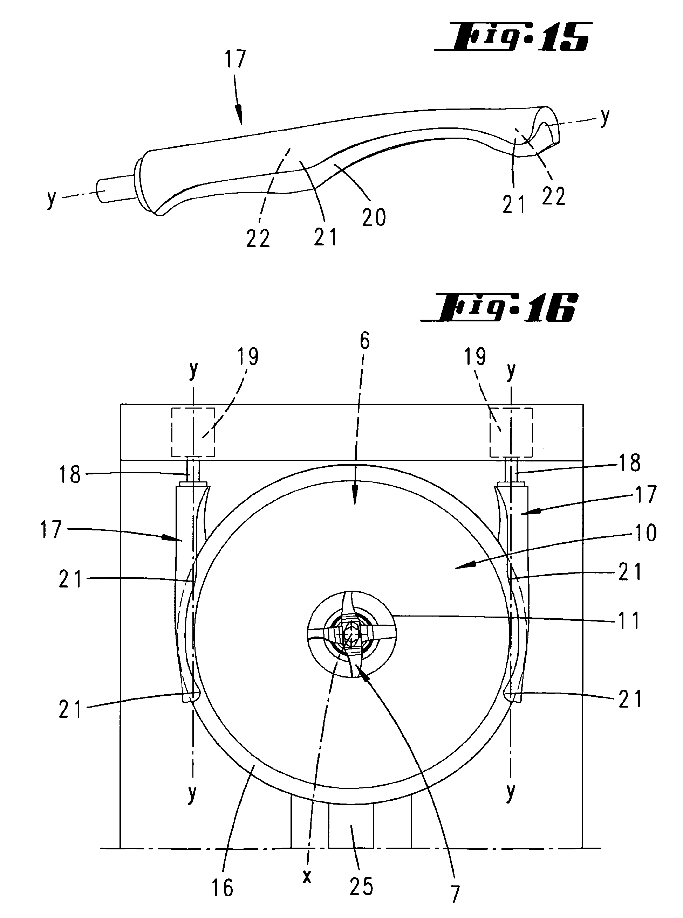

Die Figuren 15 und 16 zeigen eine Ausführungsform, bei welcher ein Verriegelungsteil 17 gemäß der vorbeschriebenen Ausführung, bei welcher die geometrische Achse y die Gefäßwandung 12 durchsetzt, zur Reduzierung insbesondere des im frei auskragenden Endbereich sich einstellenden Durchmessers mit Bezug auf die Längserstreckung des Verriegelungsteiles 17 gekrümmt verläuft, dies unter Ausformung entsprechend positionierter Übergreifabschnitte 21 und Auflagebereiche 23.

### BEZUGSZEICHENLISTE

- 1: Küchenmaschine
- 2: Bedienfeld
- 3: Taster
- 4: Display
- 5: Gefäßaufnahme
- 6: Gefäß
- 7: Rührwerk
- 8: Heizung
- 9: Netzanschlusskabel
- 10: Deckel
- 11: Einfüllöffnung
- 12: Gefäßwandung
- 13: Gefäßrand
- 14: Wölbungsfläche
- 15: Kragen
- 16: Deckelrand
- 17: Verriegelungsteil
- 18: Wellenstumpf
- 19: Elektromotor
- 20: Höhlung
- 21: Übergreifabschnitt
- 22: Höhlungsabschnitt
- 23: Auflagebereich
- 24: Übergriff
- 25: Griff
- 26: Halterung

- a: Abstandsmaß
- d: Durchmessermaß
- v: Verbindungslinie
- x: Vertikalachse
- y: Drehachse

- E: Ebene

## Patentansprüche

1. Gefäß (6) mit einem Deckel (10), wobei der Deckel (10) in der Verschlussstellung gegen das Gefäß (6) verriegelbar ist, wobei weiter das Gefäß (6) einen Gefäßboden und eine sich vom Boden nach oben erstreckende Gefäßwandung (12) aufweist, wobei die Gefäßwandung (12) in einen radial auskragenden Gefäßrand (13) übergeht, wobei weiter der Deckel (10) einen Deckelrand (16) aufweist, der in der Verschlussstellung in Überdeckung zu dem Gefäßrand (13) liegt, wobei weiter die Verriegelung aus einem zum Übergreifen des Deckels bestehenden Verriegelungsteil (17) gebildet ist, das durch Drehen um eine geometrische Achse (y) aus einer Freigabestellung in die Verriegelungsstellung und umgekehrt verlagerbar ist, wobei das Verriegelungsteil (17) in Erstreckungsrichtung der Achse (y) langgestreckt ausgebildet ist, **dadurch gekennzeichnet, dass** das insgesamt wellenartig ausgebildete Verriegelungsteil mit einer sich über die axiale Länge erstreckenden Höhlung (20) ausgebildet ist, wobei mit Bezug auf einen Vertikalschnitt ein kreisbogenartiger Übergreifabschnitt (21) gegeben ist und der von dem Übergreifabschnitt (21) überdeckte Höhlungsabschnitt (22) hinsichtlich seiner Radialerstreckung als auch hinsichtlich seiner Erstreckung in Umfangsrichtung ausgelegt ist zur formschlüssigen Aufnahme des Gefäßrandes (13) sowie des Deckelrandes (16) des auf dem Gefäß (6) aufgesetzten Deckels (10).

2. Gefäß nach Anspruch 1, **dadurch gekennzeichnet, dass** die geometrische Achse (y) in ihrer Erstreckung parallel oder in einem spitzen Winkel von 0,5 bis 30° zu einer durch einen Deckelrand (16) aufgespannte Ebene (E), die quergerichtet zu einer vertikal ausgerichteten Gefäßachse ist, verläuft.

3. Gefäß nach Anspruch 1 oder 2, **dadurch gekennzeichnet, dass** die geometrische Achse (y) außerhalb der Gefäßwandung (12) angeordnet ist oder die Gefäßwandung (12) durchsetzt.

4. Gefäß nach einem der vorhergehenden Ansprüche, **dadurch gekennzeichnet, dass** sich die geometrische Achse (y) unterhalb des Gefäßrandes (13) erstreckt.

5. Gefäß nach einem der Ansprüche 1 bis 4, **dadurch gekennzeichnet, dass** das Verriegelungsteil (17) aus der Freigabestellung in die Verriegelungsstellung und umgekehrt von einer oder beiden Endbereichen drehend antreibbar ist und/oder dass sich im Verriegelungszustand an dem Verriegelungsteil (17) in Umfangsrichtung des Deckelrandes (16) beabstandet mindestens zwei Übergreifabschnitte (21) einstellen.

6. Gefäß nach Anspruch 5, **dadurch gekennzeichnet, dass** äußerste Verriegelungsbereiche des Verriegelungsteils (17) im Verriegelungszustand um 1/10 bis 1/2 des Deckeldurchmessers (d) zueinander beabstandet sind.

7. Gefäß nach einem der vorhergehenden Ansprüche, **dadurch gekennzeichnet, dass** das Verriegelungsteil (17) den Deckelrand (16) im Querschnitt kreisbogenartig über einen Bereich von 30 bis 90° überdeckt.

8. Gefäß nach einem der vorhergehenden Ansprüche, **dadurch gekennzeichnet, dass** das Verriegelungsteil (17) sich zu dem Deckelrand über einen kreisbogenartigen Bereich von 30 bis 90° bewegt.

9. Gefäß nach einem der vorhergehenden Ansprüche, **dadurch gekennzeichnet, dass** gegenüberliegend zu dem Verriegelungsteil (17) ein feststehender Übergriff (24) ausgebildet ist.

10. Gefäß nach einem der vorhergehenden Ansprüche, **dadurch gekennzeichnet, dass** zwei Verriegelungsteile (17) bezüglich einer Mittelachse (x) des Gefäßes (6) gegenüberliegend angeordnet sind.

11. Gefäß nach einem der Ansprüche 1 bis 10, **dadurch gekennzeichnet, dass** zwei gegenüberliegende Verriegelungsteile (17) vorgesehen sind, wobei die Achsen (y) in einer Draufsicht einen spitzen Winkel einschließen, wobei, bevorzugt diametral gegenüberliegend zu dem Schnittpunkt der beiden Drehachsen (y) ein feststehender Übergriff (24) ausgebildet ist.

12. Gefäß nach einem der vorhergehenden Ansprüche, **dadurch gekennzeichnet, dass** das Verriegelungsteil (17) einen Auflagebereich (23) für den Gefäßrand (13) aufweist, wobei, bevorzugt der Auflagebereich (23) kugelkopfartig ausgebildet ist.

13. Gefäß nach Anspruch 12, **dadurch gekennzeichnet, dass** der Auflagebereich (23) in Bezug auf die Längserstreckung des Verriegelungsteiles (17) mittig zwischen den äußersten Verriegelungsbereichen ausgebildet ist.

14. Gefäß nach einem der Ansprüche 12 oder 13, **dadurch gekennzeichnet, dass** das Verriegelungsteil (17) zwei über den Umfang des Gefäßrandes (13) versetzte Auflagebereiche (23) für den Gefäßrand (13) aufweist.

15. Elektrisch betriebene Küchenmaschine mit einem als Gargefäß ausgebildeten Gefäß (6) nach einem der Ansprüche 1 bis 14.

## Claims

1. Vessel (6) having a lid (10), in the closed position the lid (10) being lockable against the vessel (6), the vessel (6) also having a vessel base and a vessel wall (12) extending upwardly from the base, the vessel wall (12) merging into a radially outwardly projecting vessel rim (13), the lid (10) also having a lid edge (16) which in the closed position overlies the vessel rim (13), the locking being formed from a locking part (17) which is for engaging over the lid (10), the locking part being displaceable from a release position into the locking position and vice versa by rotation about an axis (y), the locking part (17) being elongated in the direction of extent of the axis (y), **characterized in that** the locking part, which is formed with an overall wavelike design, is provided with a cavity (20) that extends over the axial length, wherein, with respect to a vertical cross-section, a circular arc-like over-engaging portion (21) is provided and the cavity portion (22) covered by the over-engaging portion (21) is adapted, with regard to its radial extent and also with regard to its extent in the peripheral direction, for accommodating in a positive-fit manner the vessel rim (13) as well as the lid edge (16) of the lid (10) mounted on the vessel (6).

2. Vessel according to Claim 1, **characterized in that** the geometric axis (y) runs in its extent parallel to a plane (E) that is determined by a lid edge (16) or at an acute angel of 0.5° to 30° with respect to said plane, the plane being transverse with respect to a vertically aligned vessel axis.

3. Vessel according to Claim 1 or 2, **characterized in that** the geometric axis (y) is situated outside the vessel wall (12) or passes through the vessel wall (12).

4. Vessel according to one of the preceding claims, **characterized in that** the geometric axis (y) extends beneath the vessel rim (13).

5. Vessel according to one of Claims 1 to 4, **characterized in that** the locking part (17) is rotatably drivable from one or both end portions from the release position into the locking position, and vice versa and/or that in the locked state at least two over-engaging portions (21) at a distance from one another in the peripheral direction of the lid edge (16) are provided on the locking part (17).

6. Vessel according to Claim 5, **characterized in that** in the locked state the outermost locking areas of the locking part (17) are separated from one another by a distance that is 1/10 to 1/2 of the lid diameter (d).

7. Vessel according to one of the preceding claims, **characterized in that** the locking part (17) engages over the lid edge (16) in a circular arc-like manner in cross-section over a range of 30° to 90° and/or approaches this range.

8. Vessel according to one of the preceding claims, **characterized in that** the locking part (17) moves towards the lid edge over a circular arc-like range of 30° to 90°.

9. Vessel according to one of the preceding claims, **characterized in that** a stationary over-engaging element (24) is formed opposite from the locking part (17).

10. Vessel according to one of the preceding claims, **characterized in that** two locking parts (17) are oppositely situated with respect to a center axis (x) of the vessel (6).

11. Vessel according to one of Claims 1 to 10, **characterized in that** two oppositely situated locking parts (17) are provided, the axes (y) enclosing an acute angle in a top view, whereby, preferably a stationary over-engaging element (24) is formed diametrically opposite from the point of intersection of the two rotational axes (y).

12. Vessel according to one of the preceding claims, **characterized in that** the locking part (17) has a contact area (23) for the vessel rim (13), whereby, preferably the contact area (23) has a spherical head shape.

13. Vessel according to Claim 12, **characterized in that** the contact area (23) is provided centrally, with respect to the longitudinal extent of the locking part (17), between the outermost locking areas.

14. Vessel according to one of Claims 12 or 13, **characterized in that** the locking part (17) has two contact areas (23) for the vessel rim (13) which are offset over the periphery of the vessel rim (13).

15. Electrically operated kitchen appliance having a vessel (6) according to one of Claims 1 to 14 as a cooking vessel.

## Revendications

1. Récipient (6) avec un couvercle (10), dans lequel le couvercle (10) en position de fermeture est verrouillable contre le récipient (6), le récipient (6) présentant un fond de récipient et une paroi de récipient (12) s'étendant vers le haut à partir du fond de récipient, la paroi de récipient (12) évoluant en un bord de récipient (13) en saillie radiale, le couvercle (10) présentant un bord de couvercle (16) lequel est, en position de fermeture, placé en recouvrement du bord de récipient (13), dans lequel en outre le verrouillage est réalisé par un élément de verrouillage (17) venant agripper le couvercle lequel élément de verrouillage est mobile par rotation autour d'un axe géométrique (y) depuis une position de déverrouillage vers une position de verrouillage et vice-versa, l'élément de verrouillage (17) étant allongée suivant la direction d'extension de l'axe (y), **caractérisé en ce que** l'élément de verrouillage globalement en forme d'arbre présente une cavité (20) s'étendant sur la longueur axiale dans lequel est formé en section verticale une partie d'agrippage (21) en forme d'arc de cercle et la partie de cavité (22) recouvert par la partie d'aggripage (21) est conformée suivant son extension radiale et suivant son extension circonférentielle pour recevoir par coopération de forme le bord de récipient (13), ainsi que le bord de couvercle (16) du couvercle (10) placé sur le récipient (6).

2. Récipient selon la revendication 1, **caractérisé en ce que** l'axe géométrique (y) s'étend parallèlement ou avec un angle aigu de 0,5 à 30° par rapport à un plan (E) passant par un bord de couvercle (16) et qui est transversal à un axe vertical du récipient.

3. Récipient selon la revendication 1 ou 2, **caractérisé en ce que** l'axe géométrique (y) est agencé à l'extérieur de la paroi de récipient (12) ou traverse la paroi de récipient (12).

4. Récipient selon l'une des revendications précédentes, **caractérisé en ce que** l'axe géométrique (y) s'étend en dessous du bord de récipient (13).

5. Récipient selon l'une des revendications 1 à 4, **caractérisé en ce que** l'élément de verrouillage (17) est actionnable en rotation depuis l'une des zones d'extrémités ou les deux pour passer de la position de déverrouillage à la position de verrouillage et vice-versa et/ou qu'à l'état verrouillé au moins deux parties d'aggripage (21) de la partie de verrouillage (17) se placent de manière espacée en direction circonférentielle du bord de couvercle (16).

6. Récipient selon la revendication 5, **caractérisé en ce que** les zones de verrouillage les plus extérieures de l'élément de verrouillage (17) à l'état verrouillé sont espacés l'un de l'autre de 1/10 à 1/2 du diamètre du couvercle (d).

7. Récipient selon l'une des revendications précédentes, **caractérisé en ce que** l'élément de verrouillage (17) recouvre en section transversale suivant un arc de cercle le bord de couvercle (16) sur une zone de 30 à 90°.

8. Récipient selon l'une des revendications précédentes, **caractérisé en ce que** l'élément de verrouillage (17) est mobile par rapport au bord du couvercle sur une zone en arc de cercle de 30 à 90°.

9. Récipient selon l'une des revendications précédentes, **caractérisé en ce qu'**un élément d'engagement fixe (24) est formé en face de l'élément de verrouillage (17).

10. Récipient selon l'une des revendications précédentes, **caractérisé en ce que** deux éléments de verrouillage (17) sont agencés face à face par rapport à un axe médian (x) du récipient (6).

11. Récipient selon l'une des revendications 1 à 10, **caractérisé en ce que** sont prévus deux éléments de verrouillage (17) dans lequel les axes (y) forment un angle aigu dans une vue de dessus et dans lequel est formé un élément d'engagement fixe (24) qui est de préférence disposé diamétralement opposé au point d'intersection des deux axes de rotation (y).

12. Récipient selon l'une des revendications précédentes, **caractérisé en ce que** l'élément de verrouillage (17) présente une zone d'appui (23) pour le bord de récipient (13), dans lequel la zone d'appui (23) est préférentiellement de forme sphérique.

13. Récipient selon la revendication 12, **caractérisé en ce que** la zone d'appui (23) est formée au milieu entre les zones de verrouillage les plus extérieures suivant la direction d'extension longitudinale de l'élément de verrouillage (17).

14. Récipient selon une des revendications 12 ou 13, **caractérisé en ce que** l'élément de verrouillage (17) présente deux zones d'appui décalées suivant la circonférence du bord de récipient (13).

15. Appareil de cuisine électrique comprenant un récipient (6) selon l'une des revendications 1 à 14 réalisé sous forme de récipient de cuisson.
